# FASCICULE DE BREVET EUROPEEN

(11) **EP 1 069 298 B1**
(45) Date de publication et mention de la délivrance du brevet: **06.05.2004**
(21) Numéro de dépôt: 00401883.4
(22) Date de dépôt: 30.06.2000
(51) Int. Cl.: F02D 41/22, F02D 33/02, F01L 9/04, F02D 13/02

(54) **Procédé de commande d'un moteur à combustion en vue de compenser la défaillance d'une soupape**
Verfahren zur Steuerung eines Verbrennungsmotors um das Versagen eines Ventiles zu kompensieren
Control method for an internal combustion engine in order to compensate valve failure

(30) Priorité: 16.07.1999 FR 9909230
(43) Date de publication de la demande: 17.01.2001
(73) Titulaire: Renault s.a.s., 92100 Boulogne Billancourt (FR)
(72) Inventeur: Fernandez, Alain, 91150 Etampes (FR); Desjardins, Georges, 92500 Rueil Malmaison (FR)

(56) Documents cités:
- EP-A- 0 493 634
- EP-A- 0 777 038
- US-A- 5 190 013
- PATENT ABSTRACTS OF JAPAN vol. 017, no. 612 (M-1509), 11 novembre 1993 (1993-11-11) & JP 05 187335 A (NIPPONDENSO CO LTD), 27 juillet 1993 (1993-07-27)
- PATENT ABSTRACTS OF JAPAN vol. 011, no. 098 (M-575), 27 mars 1987 (1987-03-27) & JP 61 247843 A (MASASHI YAMAKAWA), 5 novembre 1986 (1986-11-05)

## Description

La présente invention concerne un moteur à combustion, notamment un moteur thermique de véhicule automobile.

L'invention concerne plus particulièrement un procédé de commande d'un moteur à combustion à quatre temps en vue de compenser la défaillance d'une soupape.

L'invention concerne plus particulièrement un moteur à combustion dont les soupapes d'admission et d'échappement de chaque cylindre sont montées sur ressorts et commandées individuellement au moyen d'un actionneur linéaire, notamment d'un actionneur électromagnétique, chaque actionneur d'une soupape étant relié à une unité électronique de commande du moteur.

Un tel moteur à combustion sans arbres à cames, aussi appelé moteur "camless", offre de grandes possibilités pour la commande individualisée des soupapes d'admission et d'échappement indépendamment du ou des diagrammes généraux de distribution du moteur.

Dans les moteurs "camless" on ne peut pas se garantir totalement de la "perte d'une soupape". Il est possible que le mouvement d'une soupape, pour une raison inconnue, n'ait pas suivi la loi de commande de l'unité électronique de commande du moteur. Ainsi, sous l'action des ressorts, la soupape reste ouverte en position d'équilibre à mi-course.

Quand survient l'allumage, même sans compression, une combustion peut se déclencher et se propager dans le circuit d'admission ou d'échappement. Cet incident peut générer des retours de flamme et/ou des détonations destructrices.

L'invention vise à proposer un procédé de commande d'un tel moteur sans arbres à cames en vue de compenser la défaillance d'une soupape.

Dans ce but, l'invention propose un procédé de commande d'un moteur à combustion à quatre temps, du type comportant un circuit d'admission d'air ou de mélange air/carburant et un circuit d'échappement de gaz brûlés qui communiquent avec une chambre de combustion d'au moins un cylindre du moteur, du type dans lequel les communications des circuits d'admission et d'échappement avec la chambre sont susceptibles d'être obturées chacune respectivement par au moins une soupape, respectivement d'admission et d'échappement à ouverture commandée par un actionneur linéaire, notamment par un actionneur électromagnétique, relié à une unité électronique de commande, en vue de compenser la défaillance d'une soupape, caractérisé en ce qu'il consiste, successivement, à :
- a) détecter la soupape défaillante ;
- b) couper l'alimentation en carburant et, si le moteur est du type à allumage commandé que l'on peut couper, à couper l'allumage, sur le cylindre correspondant ;
- c) si une charge a été admise dans la chambre de combustion et qu'il y a un risque de la voir brûler, commander les soupapes valides de façon à, limiter l'admission de charge carburée et diluer la charge admise par des gaz brûlés ;
- d) commander le fonctionnement du cylindre selon un premier mode dégradé si la soupape défaillante est une soupape d'admission, ou selon un second mode dégradé si la soupape défaillante est une soupape d'échappement, jusqu'à ce que le fonctionnement de la soupape défaillante soit à nouveau normal.

Grâce à un tel procédé, il est extrêmement peu probable qu'il y ait une combustion dans le cylindre dont une soupape est défaillante. En effet, soit on a pu empêcher l'admission d'une charge carburée dans le cylindre, soit on a limité l'admission de charge carburée et dilué cette charge avec des gaz brûlés, ce qui rend le mélange peu combustible. S'il y a une combustion, du fait de la forte dilution, elle est peu énergétique et donc peu destructrice.

Selon d'autres caractéristiques de l'invention :
- dans le cas d'une charge admise risquant de brûler, pour limiter cette admission, on commande la fermeture des soupapes d'admission valides le plus tôt possible ;
- dans le cas d'une charge admise risquant de brûler, pour diluer cette charge par des gaz brûlés, on commande l'ouverture des soupapes d'échappement valides le plus tôt possible ;
- dans le cas d'une charge admise risquant de brûler, pendant la course ascendante du piston ou un peu avant, on maintient les soupapes d'échappement valides ouvertes si l'on accepte de refouler la charge vers le circuit d'échappement, ou on commande la fermeture des soupapes d'échappement valides si l'on veut éviter de refouler la charge vers le circuit d'échappement ;
- dans le cas d'une charge admise risquant de brûler, pendant la course ascendante du piston ou un peu avant, on commande l'ouverture des soupapes d'admission valides ;
- le premier mode dégradé correspond à un fonctionnement lors duquel les soupapes d'échappement sont fermées et les soupapes d'admission valides sont, soit ouvertes si l'on cherche à réduire les pertes par pompage, soit fermées si l'on cherche à réduire les perturbations acoustiques dans les circuits d'admission ;
- le second mode dégradé correspond à un fonctionnement lors duquel les soupapes d'admission valides sont fermées et les soupapes d'échappement valides sont ouvertes ;
- pour détecter la défaillance d'une soupape, on analyse des caractéristiques électriques représentatives du bon fonctionnement des actionneurs électromagnétiques, ou on analyse des mesures du déplacement des soupapes ou des actionneurs ;
- après avoir traité le cas d'une charge admise risquant de brûler ou à la fin d'un cycle de fonctionnement selon un des modes dégradés, lorsque le piston se trouve au point mort haut, l'unité électronique de commande lance un programme de remise en mouvement de la soupape défaillante, puis commande le fonctionnement du cylindre selon le mode dégradé prévu, si la soupape est toujours défaillante, ou selon le cycle normal, si la soupape n'est plus défaillante ;
- pendant la durée du programme de remise en mouvement de la soupape défaillante, on maintient au moins une soupape ouverte ;
- si l'allumage est commun à plusieurs cylindres, il est remis en service lorsqu'il n'y a plus de risque de combustion ;
- si le moteur est du type à rapport volumétrique variable, dès que l'on détecte la défaillance d'une soupape sur le cylindre, on force au plus tôt la commande du rapport volumétrique sur le cylindre à une valeur de consigne basse ;
- si le moteur est du type à régulation de la température de l'air à l'admission, dès que l'on détecte la défaillance d'une soupape sur le cylindre on force la commande de température à une valeur de consigne basse ;
- si le moteur est du type à suralimentation, dès que l'on détecte la défaillance d'une soupape sur le cylindre, on inhibe la suralimentation ;
- si le moteur est du type à gestion du couple moteur par un calculateur de contrôle moteur, dès que l'on détecte la défaillance d'une soupape sur le cylindre, on limite le régime du moteur et, si le moteur est muni d'un papillon des gaz motorisé, on limite la charge admise au moyen de la commande du papillon des gaz ;
- lorsque l'on détecte la défaillance d'une soupape sur le cylindre, on conseille à l'utilisateur d'effectuer un examen mécanique, notamment en allumant un voyant d'alerte sur un tableau de bord.

D'autres caractéristiques et avantages de l'invention apparaîtront à la lecture de la description détaillée qui suit pour la compréhension de laquelle on se reportera aux dessins annexés dans lesquels :
- la figure 1 est une.vue schématique partielle en coupe d'une partie d'un moteur à combustion interne à soupapes sans arbre à cames et commandé selon un procédé conforme aux enseignements de l'invention ;
- la figure 2 est un ordinogramme pour l'illustration de la mise en oeuvre du procédé selon l'invention dans le cas d'une soupape d'admission défaillante ;
- la figure 3 est un ordinogramme pour l'illustration de la mise en oeuvre du procédé selon l'invention dans le cas d'une soupape d'échappement défaillante.

On expliquera par la suite la mise en oeuvre du procédé selon l'invention dans le cas d'un moteur muni d'au moins un cylindre, chaque cylindre comportant plusieurs soupapes d'admission et plusieurs soupapes d'échappement.

Les opérations effectuées pour compenser la défaillance d'une soupape ne concernent que le cylindre incriminé, c'est à dire le cylindre dont une soupape est défaillante. S'il y a d'autres cylindres, on supposera pour les explications qu'ils fonctionnent normalement pendant la défaillance de la soupape.

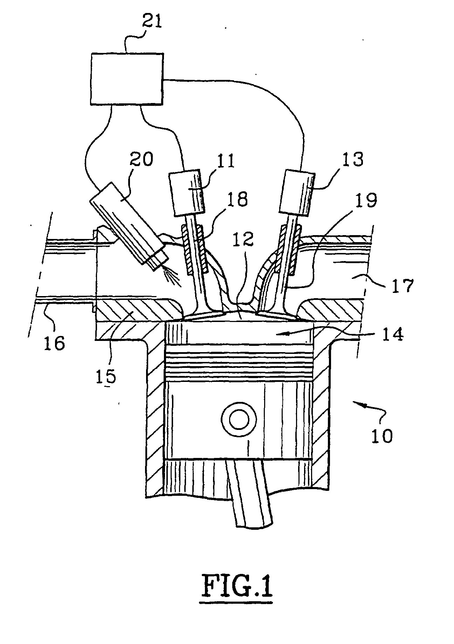

On a représenté à la figure 1 un cylindre 10 d'un moteur à combustion interne à quatre temps et dont la partie supérieure forme une chambre de combustion 12 délimitée par un piston mobile 14 et par une culasse 15.

Le cylindre 10 comporte plusieurs soupapes d'admission et plusieurs soupapes d'échappement. On a représenté une seule soupape d'admission 18 et une seule soupape d'échappement 19.

Le cylindre 10 est alimenté en mélange air/carburant par un circuit d'admission 16 qui débouche dans la chambre de combustion 12 au travers des soupapes d'admission 18 dont les déplacements sont commandés par des actionneurs électromagnétiques linéaires 11 afin d'obturer ou non les communications entre le circuit d'admission 16 et la chambre de combustion 12.

Un circuit d'échappement 17 est prévu pour l'évacuation des gaz brûlés hors de la chambre de combustion 12 au travers des soupapes d'échappement 19 également commandées par des actionneurs linéaires électromagnétiques 13.

Chaque soupape est montée sur deux ressorts (non représentés) de force sensiblement équivalente, l'un tendant à maintenir la soupape en position fermée, l'autre tendant à la maintenir en position ouverte.

La commande des soupapes d'admission 18 et d'échappement 19 est assurée par une unité électronique de commande 21 qui pilote les actionneurs 11, 13, et qui commande aussi l'injection de carburant, ici indirecte, au moyen d'un injecteur 20, de même que l'allumage au moyen d'une bougie (non représentée).

L'unité électronique de commande 21 comporte notamment des moyens de mémorisation d'une ou plusieurs cartographies de fonctionnement du moteur dont chacune détermine les différents paramètres et états du moteur pour une gamme de points de fonctionnement, en vue notamment de déterminer le régime de rotation du moteur, la charge de chaque cylindre, etc.

L'unité électronique de commande 21 reçoit des signaux représentatifs de paramètres de fonctionnement tels que le régime du moteur, la pression atmosphérique, la pression dans chaque cylindre, le débit des gaz d'admission et/ou d'échappement, le couple instantané fourni, etc.

L'unité électronique de commande 21 analyse en particulier des caractéristiques électriques représentatives du bon fonctionnement des actionneurs 11, 13.

Par exemple, la forme de la courbe du courant alimentant un actionneur évolue sensiblement, suivant la dynamique de déplacement de la soupape, avec des différences en fonction du sens de déplacement. Cette particularité est exploitée par l'unité électronique de commande 21 pour détecter la défaillance d'une soupape qui, sous l'action des deux ressorts, reste ouverte en position d'équilibre à mi-course.

Selon une variante de réalisation, pour détecter la défaillance d'une soupape, l'unité électronique de commande 21 analyse des mesures du déplacement des soupapes ou des actionneurs 11, 13.

Selon le principe du cycle à quatre temps d'un moteur à combustion, celui-ci s'effectue en deux rotations du vilebrequin et en quatre courses du piston 14, les quatre temps du cycle étant l'admission, la compression, la combustion et l'échappement.

Lors d'une rotation du vilebrequin, le piston 14 effectue une course descendante du point mort haut PMH vers le point mort bas PMB, puis il effectue une course ascendante du point mort bas PMB vers le point mort haut PMH.

Si l'unité électronique de commande 21 détecte la défaillance d'une soupape, elle pilote les actionneurs 11, 13, l'injecteur 20 et la bougie, de façon à compenser cette défaillance. Le pilotage de ces éléments vise à prévenir l'apparition de la combustion ou rendre cette dernière peu énergétique.

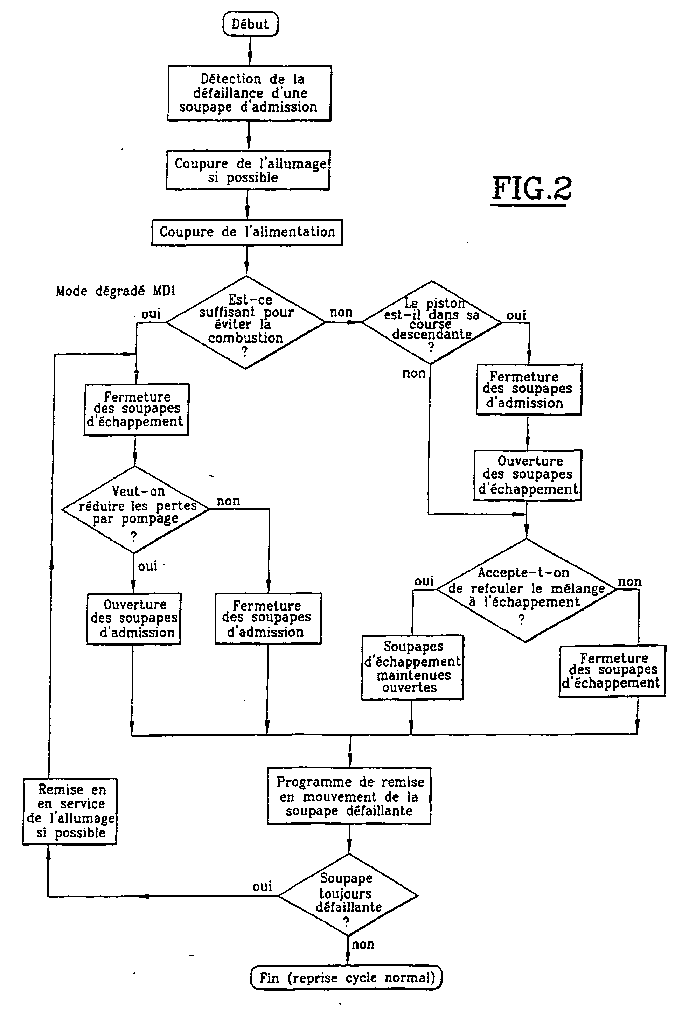

On a illustré schématiquement à la figure 2 les différentes étapes du procédé de commande selon l'invention, dans le cas de la défaillance d'une soupape d'admission 18.

Dès que l'unité électronique de commande 21 détecte la défaillance d'une soupape d'admission 18, elle commande, sur le.cylindre incriminé, la coupure de l'alimentation en carburant, et la coupure de l'allumage si le moteur est équipé d'un dispositif d'allumage compatible.

Par dispositif d'allumage compatible on entend que le dispositif d'allumage comporte une bobine d'allumage par cylindre, ou bien qu'il comporte une bobine d'allumage pour deux cylindres, mais aussi que les cycles de fonctionnement de chacun de ces deux cylindres sont décalés d'un tour de vilebrequin.

L'unité électronique de commande détermine ensuite le risque de combustion. Le risque de combustion est effectif si l'allumage n'a pu être coupé, ou si un point chaud est capable d'initier une combustion.

Supposons que l'unité électronique de commande 21 considère que les coupures de l'allumage et de l'alimentation sont suffisantes pour éviter la combustion.

L'unité électronique de commande 21 commande le fonctionnement du cylindre selon un premier mode dégradé MD1.

Le premier mode dégradé MD1 consiste d'une part à maintenir la fermeture des soupapes d'échappement 19 et, d'autre part, à commander soit l'ouverture, soit la fermeture, des soupapes d'admission 18 valides. Par ailleurs on maintient les coupures de l'allumage et de l'alimentation en carburant.

La fermeture des soupapes d'échappement 19 vise à éviter toute alimentation en air frais du circuit d'échappement 17.

Selon le premier mode dégradé MD1, on commande l'ouverture des soupapes d'admission 18 valides si l'on souhaite réduire les pertes par pompage. On commande la fermeture des soupapes d'admission 18 valides si l'on souhaite réduire les perturbations acoustiques dans le circuit d'admission 16. Ces perturbations acoustiques sont dues aux phases successives d'aspiration et de refoulement.

Supposons que l'unité électronique de commande 21 considère que le risque de combustion est effectif.L'unité électronique de commande 21 identifie alors la position dans laquelle se trouve le piston 14.

Si l'on a détecté la défaillance de la soupape d'admission 18 à son ouverture, le piston 14 se trouve alors au voisinage du point mort haut PMH.

Si l'on a détecté la défaillance de la soupape d'admission 18 à sa fermeture, le piston 14 se trouve alors dans sa course descendante, ou au voisinage du point mort bas PMB.

Lorsque le piston 14 se trouve au voisinage du point mort haut PMH ou dans sa course descendante, l'unité électronique de commande 21 commande alors, le plus tôt possible, la fermeture des soupapes d'admission 18 valides et l'ouverture des soupapes d'échappement 19.

L'objet de cette commande est de limiter l'admission de charge carburée, en fermant les soupapes d'admission 18 valides, et de diluer la charge admise par des gaz brûlés introduits en ouvrant les soupapes d'échappement 19. La chambre de combustion 12 se trouve ainsi remplie d'un mélange d'air et de gaz d'échappement, avec une très forte proportion de ces derniers. Le mélange est très peu combustible.

Lorsque le piston 14 se trouve au voisinage du point mort bas PMB ou bien dans sa course ascendante, soit l'unité électronique de commande 21 maintient alors les soupapes d'échappement 19 ouvertes, soit l'unité électronique de commande 21 commande la fermeture des soupapes d'échappement 19.

On commande la fermeture des soupapes d'échappement 19 si l'on veut éviter de refouler de la charge non brûlée vers le circuit d'échappement 17. On agit de cette façon, par exemple si l'on craint que la charge ne brûle au niveau d'un catalyseur (non représenté) situé à la sortie du circuit d'échappement 17 et qu'elle ne le détériore.

Si l'on a maintenu les soupapes d'échappement 19 ouvertes, pendant la course ascendante du piston 14, le mélange est refoulé principalement vers le circuit d'échappement 17 et, pour une faible partie, vers le circuit d'admission 16.

Si l'on a commandé la fermeture des soupapes d'échappement 19 pendant la course ascendante du piston 14, le mélange est refoulé vers le circuit d'admission 16.

Du fait de la forte dilution de la charge carburée, il est peu probable qu'il y ait une combustion et, si elle a lieu, elle est peu énergétique et donc peu destructrice.

Lorsque le cycle est complété, c'est à dire que le piston 14 se trouve à nouveau au point mort haut PMH, l'unité électronique de commande 21 lance un programme de remise en mouvement de la soupape défaillante. Pendant ce programme, les soupapes d'échappement 19 restent fermées et les soupapes d'admission 18 valides restent ouvertes.

Des programmes de remise en mouvement d'une soupape sont connus. On peut par exemple exciter à nouveau électriquement l'actionneur de la soupape défaillante.

Par ailleurs, le risque de combustion étant passé, l'allumage commun à plusieurs cylindres peut être rétabli.

Si la soupape n'est plus défaillante, l'unité électronique de commande 21 commande la reprise du fonctionnement normal du cylindre 10 au prochain signal de synchronisation avec les autres cylindres.

Si la soupape est toujours défaillante, l'unité électronique de commande 21 commande le fonctionnement du cylindre 10 selon le premier mode dégradé MD1 jusqu'à ce que la soupape défaillante fonctionne de nouveau.

On note que pendant le fonctionnement selon le premier mode dégradé MD1, lorsque le piston 14 se trouve au point mort haut PMH, l'unité électronique lance aussi le programme de remise en mouvement de la soupape défaillante.

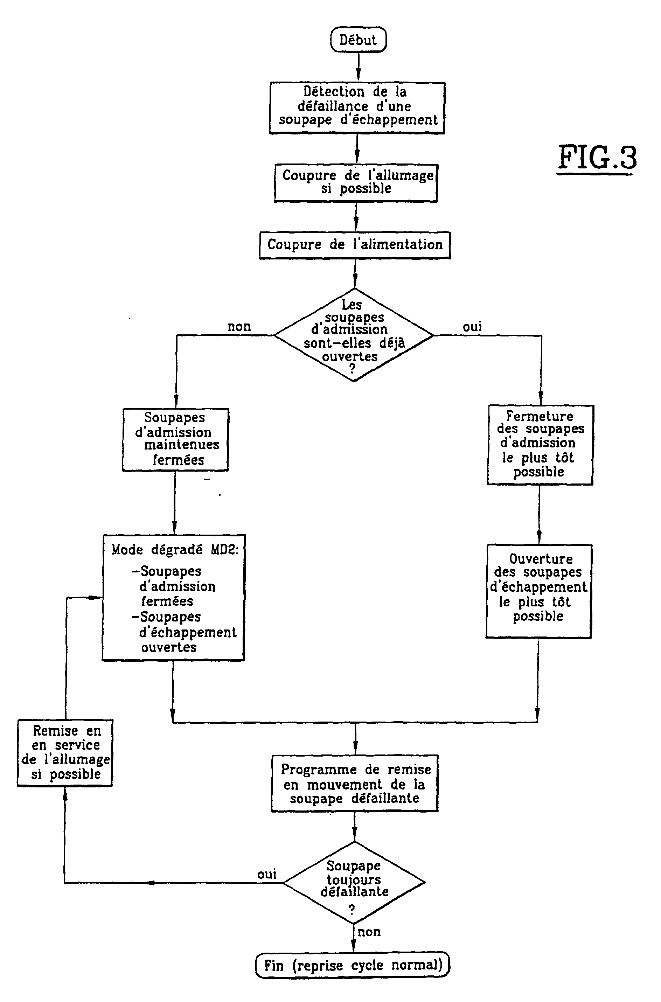

On a illustré schématiquement à la figure 3 le procédé de commande selon l'invention dans le cas de la défaillance d'une soupape d'échappement 19.

Dès que l'unité électronique de commande 21 détecte la défaillance d'une soupape d'échappement 19, elle commande la coupure de l'alimentation en carburant, et la coupure de l'allumage si le moteur est équipé d'un dispositif d'allumage compatible.

Cette étape du procédé est identique à celle mise en oeuvre dans le cas d'une soupape d'admission 18 défaillante.

L'unité électronique de commande 21 identifie ensuite la position dans laquelle se trouvent les soupapes d'admission 18.

Si les soupapes d'admission 18 sont encore fermées, l'unité électronique de commande 21 les maintient fermées. Aucune charge carburée n'est admise dans la chambre de combustion 12. Il n'y a donc aucun risque de combustion.

L'unité électronique de commande 21 commande le fonctionnement du cylindre 10 selon un second mode dégradé MD2. Ce mode dégradé MD2 correspond à un fonctionnement dans lequel les soupapes d'admission 18 sont fermées et les soupapes d'échappement 19 valides sont ouvertes.

Si les soupapes d'admission 18 sont déjà ouvertes lorsque l'unité électronique de commande 21 détecte la défaillance de la soupape d'échappement 19, l'unité 21 commande la fermeture des soupapes d'admission 18 le plus tôt possible.

L'existence de cette situation signifie que l'on a détecté la panne à la fermeture des soupapes d'échappement 19, et que l'ouverture des soupapes d'admission 18 intervient avant la fermeture des soupapes d'échappement 19, c'est à dire qu'il se produit un croisement des soupapes. Une charge a été admise dans la chambre de combustion 12 et il y a un risque de la voir brûler. Le piston 14 se trouve au voisinage du point mort haut PMH.

On suit la procédure mise en place lorsqu'une soupape d'admission 18 est défaillante et qu'une charge a été admise dans la chambre de combustion 12.

L'unité électronique de commande 21 commande, le plus tôt possible, la fermeture dès soupapes d'admission 18 et l'ouverture des soupapes d'échappement 19 valides. Puis, pendant la course ascendante du piston 14, l'unité électronique de commande 21 maintient les soupapes d'échappement 19 valides ouvertes.

Lorsque le cycle du piston 14 est complété, c'est à dire qu'il se trouve à nouveau au point mort haut PMH, l'unité électronique de commande 21 lance un programme de remise en mouvement de la soupape défaillante. Pendant ce programme, les soupapes d'admission 18 restent fermées et les soupapes d'échappement 19 valides restent ouvertes.

Par ailleurs, le risque de combustion étant passé, l'allumage commun à plusieurs cylindres peut être rétabli.

Si la soupape n'est plus défaillante, l'unité électronique de commande 21 commande la reprise du fonctionnement normal du cylindre 10 au prochain signal de synchronisation avec les autres cylindres.

Si la soupape est toujours défaillante, l'unité électronique de commande 21 commande le fonctionnement du cylindre 10 selon le second mode dégradé MD2 jusqu'à ce que la soupape défaillante fonctionne de nouveau.

On note que pendant le fonctionnement selon le second mode dégradé MD2, lorsque le piston 14 se trouve au point mort haut PMH, l'unité électronique lance aussi le programme de remise en mouvement de la soupape défaillante.

On remarque que le problème de l'admission d'une charge carburée dans la chambre de combustion 12 du cylindre 10 se pose seulement pour le cycle de fonctionnement du moteur pendant lequel la défaillance survient. A la fin du quatrième temps, c'est à dire le temps d'échappement, l'alimentation ayant été coupée, aucune charge nouvelle ne sera admise tant que la défaillance d'une soupape persistera. On fonctionne alors selon un mode dégradé dans lequel l'alimentation en carburant demeure coupée, mais dans lequel l'allumage commun à plusieurs cylindres peut être rétabli.

On note aussi que dès qu'une panne de soupape est détectée, l'unité électronique de commande 21 cherche à réactiver la soupape défaillante pour que le cylindre 10 fonctionne à nouveau normalement.

Durant cette opération au moins une soupape reste ouverte, afin que les flux et les pressions dans le cylindre 10 ne viennent pas, ou peu, perturber les oscillations de remise en mouvement de la soupape défaillante.

Parfois il n'est pas possible d'empêcher l'allumage dans le cylindre 10 incriminé. C'est le cas notamment, lorsque le moteur n'est pas du type à allumage commandé. Mais ce peut être aussi le cas lorsque le moteur est du type à allumage commandé. On est alors en présence d'une combustion spontanée, ou bien la commande de l'allumage est commune à plusieurs cylindres et on ne souhaite pas "perdre" tous les cylindres simultanément.

Le fonctionnement du procédé selon l'invention décrit ci-dessus s'applique de la même façon pour un moteur dont chaque cylindre 10 comporte une seule soupape d'admission 18 et une seule soupape d'échappement 19. Dans ce cas quand, par exemple, une soupape d'admission 18 est défaillante, il n'y a pas de soupape d'admission 18 valide. Par conséquent on agit alors seulement sur la commande de la soupape d'échappement 19.

Le fonctionnement du procédé selon l'invention s'applique aussi à un moteur dont chaque cylindre 10 comporte plusieurs soupapes d'admission 18 et une seule soupape d'échappement 19, ou bien une seule soupape d'admission 18 et plusieurs soupapes d'échappement 19.

Selon une variante de l'invention, dans le cas d'un moteur du type à rapport volumétrique variable, dès que l'on détecte la défaillance d'une soupape sur le cylindre 10, on force au plus tôt la commande du rapport volumétrique sur le cylindre 10 à une valeur de consigne basse.

Selon une autre variante de l'invention, dans le cas d'un moteur du type à régulation de la température de l'air à l'admission, dès que l'on détecte la défaillance d'une soupape sur le cylindre 10 on force la commande de température à une valeur de consigne basse.

Selon encore une variante de l'invention, dans le cas d'un moteur du type à suralimentation, dès que l'on détecte la défaillance d'une soupape sur le cylindre 10, on inhibe la suralimentation.

Selon encore une autre variante de l'invention, dans le cas d'un moteur du type à gestion du couple moteur par un calculateur de contrôle moteur, dès que l'on détecte la défaillance d'une soupape sur le cylindre 10, on limite le régime du moteur et, si le moteur est muni d'un papillon des gaz motorisé, on limite la charge admise au moyen de la commande du papillon des gaz.

Le procédé selon l'invention permet aussi d'assurer une fonction de diagnostic puisque, lorsque l'on détecte la défaillance d'une soupape sur le cylindre 10, on peut conseiller à l'utilisateur d'effectuer un examen mécanique, par exemple en allumant un voyant d'alerte sur le tableau de bord.

## Revendications

1. Procédé de commande d'un moteur à combustion à quatre temps, du type comportant un circuit d'admission d'air (16) ou de mélange air/carburant et un circuit d'échappement (17) de gaz brûlés qui communiquent avec une chambre de combustion (12) d'au moins un cylindre (10) du moteur, du type dans lequel les communications des circuits d'admission (16) et d'échappement (17) avec la chambre (12) sont susceptibles d'être obturées chacune respectivement par au moins une soupape, respectivement d'admission (18) et d'échappement (19), à ouverture commandée par un actionneur linéaire, notamment par un actionneur électromagnétique (11, 13), relié à une unité électronique de commande (21), en vue de compenser la défaillance d'une soupape, **caractérisé en ce qu'**il consiste, successivement, à :
- a) détecter la soupape défaillante ;
- b) couper l'alimentation en carburant et, si le moteur est du type à allumage commandé que l'on peut couper, à couper l'allumage, sur le cylindre (10) correspondant ;
- c) si une charge a été admise dans la chambre de combustion (12) et qu'il y a un risque de la voir brûler, commander les soupapes valides de façon à, limiter l'admission de charge carburée et diluer la charge admise par des gaz brûlés ;
- d) commander le fonctionnement du cylindre (10) selon un premier mode dégradé (MD1) si la soupape défaillante est une soupape d'admission (18), ou selon un second mode dégradé (MD2) si la soupape défaillante est une soupape d'échappement (19), jusqu'à ce que le fonctionnement de la soupape défaillante soit à nouveau normal.

2. Procédé selon la revendication précédente, **caractérisé en ce que** dans le cas d'une charge admise risquant de brûler, pour limiter cette admission, on commande la fermeture des soupapes d'admission (18) valides le plus tôt possible.

3. Procédé selon l'une quelconque des revendications précédentes, **caractérisé en ce que** dans le cas d'une charge admise risquant de brûler, pour diluer cette charge par des gaz brûlés, on commande l'ouverture des soupapes d'échappement (19) valides le plus tôt possible.

4. Procédé selon l'une quelconque des revendications précédentes, **caractérisé en ce que** dans le cas d'une charge admise risquant de brûler, pendant la course ascendante du piston (14) ou un peu avant, on maintient les soupapes d'échappement (19) valides ouvertes si l'on accepte de refouler la charge vers le circuit d'échappement (17), ou on commande la fermeture des soupapes d'échappement (19) valides si l'on veut éviter de refouler la charge vers le circuit d'échappement (17).

5. Procédé selon l'une quelconque des revendications précédentes, **caractérisé en ce que** dans le cas d'une charge admise risquant de brûler, pendant la course ascendante du piston (14) ou un peu avant, on commande l'ouverture des soupapes d'admission (18) valides.

6. Procédé selon l'une quelconque des revendications précédentes, **caractérisé en ce que** le premier mode dégradé (MD1) correspond à un fonctionnement lors duquel les soupapes d'échappement (19) sont fermées et les soupapes d'admission (18) valides sont, soit ouvertes si l'on cherche à réduire les pertes par pompage, soit fermées si l'on cherche à réduire les perturbations acoustiques dans les circuits d'admission.

7. Procédé selon l'une quelconque des revendications précédentes, **caractérisé en ce que** le second mode dégradé (MD2) correspond à un fonctionnement lors duquel les soupapes d'admission (18) valides sont fermées et les soupapes d'échappement (19) valides sont ouvertes.

8. Procédé selon l'une quelconque des revendications précédentes, **caractérisé en ce que**, pour détecter la défaillance d'une soupape, on analyse des caractéristiques électriques représentatives du bon fonctionnement des actionneurs électromagnétiques (11, 13), ou on analyse des mesures du déplacement des soupapes ou des actionneurs (11, 13).

9. Procédé selon l'une quelconque des revendications précédentes, **caractérisé en ce que**, après avoir traité le cas d'une charge admise risquant de brûler ou à la fin d'un cycle de fonctionnement selon un des modes dégradés, lorsque le piston se trouve au point mort haut (PMH), l'unité électronique de commande (21) lance un programme de remise en mouvement de la soupape défaillante, puis commande le fonctionnement du cylindre (10) selon le mode dégradé prévu, si la soupape est toujours défaillante, ou selon le cycle normal, si la soupape n'est plus défaillante.

10. Procédé selon la revendication précédente, **caractérisé en ce que**, pendant la durée du programme de remise en mouvement de la soupape défaillante, on maintient au moins une soupape ouverte.

11. Procédé selon l'une quelconque des revendications précédentes, **caractérisé en ce que**, si l'allumage est commun à plusieurs cylindres, il est remis en service lorsqu'il n'y a plus de risque de combustion.

12. Procédé selon l'une quelconque des revendications précédentes, **caractérisé en ce que**, si le moteur est du type à rapport volumétrique variable, dès que l'on détecte la défaillance d'une soupape sur le cylindre (10), on force au plus tôt la commande du rapport volumétrique sur le cylindre (10) à une valeur de consigne basse.

13. Procédé selon l'une quelconque des revendications précédentes, **caractérisé en ce que**, si le moteur est du type à régulation de la température de l'air à l'admission, dès que l'on détecte la défaillance d'une soupape sur le cylindre (10) on force la commande de température à une valeur de consigne basse.

14. Procédé selon l'une quelconque des revendications précédentes, **caractérisé en ce que**, si le moteur est du type à suralimentation, dès que l'on détecte la défaillance d'une soupape sur le cylindre (10), on inhibe la suralimentation.

15. Procédé selon l'une quelconque des revendications précédentes, **caractérisé en ce que**, si le moteur est du type à gestion du couple moteur par un calculateur de contrôle moteur, dès que l'on détecte la défaillance d'une soupape sur le cylindre (10), on limite le régime du moteur et, si le moteur est muni d'un papillon des gaz motorisé, on limite la charge admise au moyen de la commande du papillon des gaz.

16. Procédé selon l'une quelconque des revendications précédentes, **caractérisé en ce que**, lorsque l'on détecte la défaillance d'une soupape sur le cylindre (10), on conseille à l'utilisateur d'effectuer un examen mécanique, notamment en allumant un voyant d'alerte sur un tableau de bord.

## Claims

1. Method for controlling a four-stroke combustion engine, of the type comprising an inlet system for an air (16) or air/fuel mixture and a burned-gas (17) which communicate with a combustion chamber (12) of at least one cylinder (10)of the engine, of the type in which the communications of the inlet (16) and exhaust 17) systems with the chamber (12) are each respectively able of be shut off by at least one valve, respectively inlet (18) or exhaust (19), with its opening controlled by a linear actuator, in particular by an electromagnetic actuator (11, 13), connected to an electronic control unit (21), in order to compensate for the failure of a valve, **characterized in that** it consists, successively, of:
- a) detecting the faulty valve;
- b) disconnecting the fuel supply and, if the engine is of the type with controlled ignition which can be disconnected, disconnecting the ignition, on the corresponding cylinder (10);
- c) if a charge has been introduced into the combustion chamber (12) and is at risk of burning, command the working valves so as to limit the intake of carburated charge and dilute the introduced charge with burned gases;
- d) control the operation of the cylinder (10) according to a first degraded mode (DM1) if the faulty valve is an inlet valve (18), or according to a second degraded mode (DM2) if the faulty valve is an exhaust valve (19), until the faulty valve is operating normally again.

2. Method according to the preceding claim, **characterized in that** in the case of an introduced charge at risk of burning, in order to limit this introduction, the working inlet valves (18) are ordered to be closed as soon as possible.

3. Method according to any one of the preceding claims, **characterized in that** in the case of an introduced charge at risk of burning, in order to dilute this charge with burned gases, the working exhaust valves (19) are ordered to be closed as soon as possible.

4. Method according to any one of the preceding claims, **characterized in that** in the case of an introduced charge at risk of burning, during the upstroke of the piston (14), or a little before, the working exhaust valves (19) are kept open if it is acceptable to push the charge towards the exhaust system (17), or the working exhaust valves (19) are ordered to close if it is desired to avoid pushing the charge towards the exhaust system (17).

5. Method according to any one of the preceding claims, **characterized in that** in the case of an introduced charge at risk of burning, during the upstroke of the piston (14) or a little before, the working inlet valves (18) are ordered to open.

6. Method according to any one of the preceding claims, **characterized in that** the first degraded mode (DM1) corresponds to an operation during which the exhaust valves (19) are closed and the working inlet valves (18) are either open if the losses are to be reduced by pumping, or closed if the acoustical noises in the inlet systems are to be reduced.

7. Method according to any one of the preceding claims, **characterized in that** the second degraded mode (DM2) corresponds to an operation during which the working inlet valves (18) are closed and the working exhaust valves (19) are open.

8. Method according to any one of the preceding claims, **characterized in that**, in order to detect the failure of a valve, electrical characteristics representative of the proper operation of the electromagnetic actuators (11, 13) are analyzed, or measurements of the displacement of the valves or actuators (11, 13) are analyzed.

9. Method according to any one of the preceding claims, **characterized in that**, after having dealt with the case of an introduced charge at risk of burning or at the end of an operating cycle according to one of the degraded modes, when the piston is situated at top dead centre (TDC), the electronic control unit (21) starts a program to restore the movement of the faulty valve, then controls the operation of the cylinder (10) according to the degraded mode provided for, if the valve is still faulty, or according to the normal cycle, if the valve is no longer faulty.

10. Method according to the preceding claim, **characterized in that**, throughout the program to reactivate the movement of the faulty valve, at least one valve is kept open.

11. Method according to any one of the preceding claims, **characterized in that**, if the ignition is common to several cylinders, it is reactivated when there is no longer any risk of combustion.

12. Method according to any one of the preceding claims, **characterized in that**, if the engine is of the variable volumetric ratio type, as soon as the failure of a valve on the cylinder (10) is detected, the volumetric ratio control on the cylinder (10) is forced to a low set point as soon as possible.

13. Method according to any one of the preceding claims, **characterized in that**, if the engine is the type with inlet-air temperature regulation, as soon as the failure of a valve on the cylinder (10) is detected, the temperature control is forced to a low set point.

14. Method according to any one of the preceding claims, **characterized in that**, if the engine is of the supercharged type, as soon as the failure of a valve on the cylinder (10) is detected, supercharging is disabled.

15. Method according to any one of the preceding claims, **characterized in that**, if the engine is of the type in which the engine torque is managed by an engine-control computer, as soon as the failure of a valve on the cylinder (10) is detected, the engine speed is limited, and if the engine is fitted with a motorized throttle valve, the introduced charge is limited by controlling the throttle valve;

16. Method according to any one of the preceding claims, **characterized in that**, when the failure of a valve on the cylinder (10) is detected, the user is advised to carry out a mechanical examination, in particular by illuminating a warning signal on an instrument panel.

## Patentansprüche

1. Verfahren zur Steuerung eines Viertakt-Verbrennungsmotors, von dem Typ, welcher eine Leitung zum Einlass von Luft (16) oder von Luft/Kraftstoffgemisch und eine Auslassleitung (17) für Abgase umfasst, welche mit einer Verbrennungskammer (12) mindestens eines Zylinders (10) des Motors kommunizieren, von dem Typ, in welchem die Verbindungen der Leitungen zum Einlass (16) und zum Auslass (17) mit der Kammer (12) im Stande sind, jede durch mindestens ein Ventil verschlossen zu werden, jeweils des Einlasses (18) und des Auslasses (19), mit durch einen linearen Aktuator gesteuerter Öffnung, insbesondere durch einen elektromagnetischen Aktuator (11, 13), der mit einer elektronischen Steuereinheit (21) verbunden ist, im Hinblick darauf, das Ausfallen eines Ventils zu kompensieren, **dadurch gekennzeichnet, dass** es nacheinander besteht aus:
a) Erfassen des ausgefallenen Ventils;
b) Unterbrechen der Versorgung mit Kraftstoff und, wenn der Motor vom Typ mit gesteuerter Zündung ist, welche unterbrochen werden kann, Unterbrechen der Zündung auf dem entsprechenden Zylinder (10);
c) wenn eine Ladung in die Verbrennungskammer (12) eingelassen wurde und es ein Risiko gibt, dass sie verbrennt, Steuern der funktionierenden Ventile, um den Einlass der kraftstoffhaltigen Ladung zu begrenzen und die eingelassene Ladung durch Abgase zu verdünnen;
d) Steuern des Betriebs des Zylinders (10) gemäß einem ersten herabgesetzten Modus (MD1), wenn das ausgefallene Ventil ein Einlassventil (18) ist, oder gemäß einem zweiten herabgesetzten Modus (MD2), wenn das ausgefallene Ventil ein Auslassventil (19) ist, bis das Funktionieren des ausgefallenen Ventils erneut normal ist.

2. Verfahren gemäß dem vorhergehenden Anspruch, **dadurch gekennzeichnet, dass** im Fall einer eingelassenen Ladung, welche zu verbrennen droht, um diesen Einlass zu begrenzen, das Verschließen der funktionierenden Einlassventile (18) so früh wie möglich gesteuert wird.

3. Verfahren gemäß einem der vorhergehenden Ansprüche, **dadurch gekennzeichnet, dass** im Fall einer eingelassenen Ladung, welche zu verbrennen droht, um diese Ladung durch Abgase zu verdünnen, die Öffnung der funktionierenden Auslassventile (19) so früh wie möglich gesteuert wird.

4. Verfahren gemäß einem der vorhergehenden Ansprüche, **dadurch gekennzeichnet, dass** im Fall einer eingelassenen Ladung, welche zu verbrennen droht, während des aufsteigenden Hubs des Kolbens (14) oder ein wenig vorher, die funktionierenden Auslassventile (19) offen gehalten werden, wenn man akzeptiert, die Ladung zu den Auslassleitungen (17) zurück zu drängen, oder das Schließen der funktionierenden Auslassventile (19) gesteuert wird, wenn man vermeiden will, die Ladung zu der Auslassleitung (17) zurück zu drängen.

5. Verfahren gemäß einem der vorhergehenden Ansprüche, **dadurch gekennzeichnet, dass** im Fall einer eingelassenen Ladung, welche zu verbrennen droht, während des aufsteigenden Hubs des Kolbens (14) oder ein wenig vorher, die Öffnung der funktionierenden Einlassventile (18) gesteuert wird.

6. Verfahren gemäß einer der vorhergehenden Ansprüche, **dadurch gekennzeichnet, dass** der erste herabgesetzte Modus (MD1) einem Betrieb entspricht, bei welchem die Auslassventile (19) geschlossen sind und die funktionierenden eines Einlassventils (18) entweder offen sind, wenn die Verluste durch Pumpen reduziert werden sollen, oder geschlossen sind, wenn die akustischen Störungen in den Einlassleitungen reduziert werden sollen.

7. Verfahren gemäß einem der vorhergehenden Ansprüche, **dadurch gekennzeichnet, dass** der zweite herabgesetzte Modus (MD2) einem Betrieb entspricht, bei welchem die funktionierenden Einlassventile (18) geschlossen sind und die funktionierenden Auslassventile (19) offen sind.

8. Verfahren gemäß einem der vorhergehenden Ansprüche, **dadurch gekennzeichnet, dass**, um den Ausfall eines Ventils zu erfassen, die elektrischen Merkmale analysiert werden, welche das richtige Funktionieren der elektromagnetischen Aktuatoren (11, 13) repräsentieren, oder es werden Messungen der Bewegung der Ventile oder der Aktuatoren (11, 13) analysiert.

9. Verfahren gemäß einem der vorhergehenden Ansprüche, **dadurch gekennzeichnet, dass**, nachdem der Fall einer eingelassen Ladung, welche zu verbrennen droht, behandelt wurde oder am Ende eines Betriebszyklus gemäß einem der herabgesetzten Modi, wenn der Kolben sich am oberen Totpunkt (PMH) befindet, die elektronische Steuereinheit (21) ein Programm startet, um das ausgefallene Ventil wieder in Bewegung zu setzen, dann den Betrieb des Zylinders (10) gemäß dem vorgesehenen herabgesetzten Modus steuert, wenn das Ventil immer noch ausgefallen ist, oder gemäß dem normalen Zyklus, wenn das Ventil nicht mehr ausgefallen ist.

10. Verfahren gemäß dem vorhergehenden Anspruch, **dadurch gekennzeichnet, dass**, während der Dauer des Programms, um das ausgefallene Ventil wieder in Bewegung zu setzen, mindestens ein Ventil offen gehalten wird.

11. Verfahren gemäß einem der vorhergehenden Ansprüche, **dadurch gekennzeichnet, dass**, wenn die Zündung mehreren Zylindern gemeinsam ist, diese wieder in Betrieb genommen wird, wenn es kein Risiko der Verbrennung mehr gibt.

12. Verfahren gemäß einem der vorhergehenden Ansprüche, **dadurch gekennzeichnet, dass**, wenn der Motor vom Typ mit variablem volumetrischem Verhältnis ist, sobald ein Ausfall eines Ventils auf dem Zylinder (10) erfasst wird, so früh wie möglich die Steuerung des volumetrischen Verhältnisses auf dem Zylinder (10) auf einen niedrigen Soll-Wert gedrückt wird.

13. Verfahren gemäß einem der vorhergehenden Ansprüche, **dadurch gekennzeichnet, dass**, wenn der Motor vom Typ mit Lufteinlass-Temperaturregelung ist, sobald der Ausfall eines Ventils auf dem Zylinder (10) erfasst wird, die Steuerung der Temperatur auf einen niedrigen Soll-Wert gedrückt wird.

14. Verfahren gemäß einem der vorhergehenden Ansprüche, **dadurch gekennzeichnet, dass**, wenn der Motor vom Aufladungstyp ist, sobald der Ausfall eines Ventils auf dem Zylinder (10) erfasst wird, die Aufladung unterdrückt wird.

15. Verfahren gemäß einem der vorhergehenden Ansprüche, **dadurch gekennzeichnet, dass**, wenn der Motor vom Typ einer Regelung der Drehzahl des Motors durch einen Motor-Steuerrechner ist, sobald der Ausfall eines Ventils auf dem Zylinder (10) erfasst wird, die Drehzahl des Motors begrenzt wird und, wenn der Motor mit einer motorisierten Drosselklappe ausgestattet ist, die eingelassene Ladung mittels der Steuerung der Drosselklappe begrenzt wird.

16. Verfahren gemäß einem der vorhergehenden Ansprüche, **dadurch gekennzeichnet, dass**, sobald der Ausfall eines Ventils auf dem Zylinder (10) erfasst wird, ein Benutzer benachrichtigt wird, eine mechanische Untersuchung zu veranlassen, insbesondere indem eine Alarmanzeige auf dem Armaturenbrett aufleuchtet.
